# EUROPEAN PATENT APPLICATION

(11) **EP 4 446 227 A1**
(43) Date of publication of application: **16.10.2024**
(21) Application number: 23461554.0
(22) Date of filing: 12.04.2023
(51) Int. Cl.: B64D 13/06, H01M 8/04111, B64D 37/30

(54) **PROCESS SYSTEM**

(71) Applicant: Hamilton Sundstrand Corporation, Charlotte, NC 28217 (US)
(72) Inventor: Yelike, Sai Kalyan, Cork, T12 KT78 (IE)
(74) Representative: Dehns

(57) **Abstract**

There is provided an air processing system (20) for an aircraft (10) comprising a hydrogen fuel cell (45). The air processing system comprises an input airflow (19); a first (21) and a second compressor (25), wherein each compressor is configured to compress the airflow in a compression stage; a first (29) and a second turbine (31), wherein each turbine is configured to decompress the airflow in a decompression stage; and a first (35) and a second shaft (37) each configured to independently rotate. Each shaft mechanically couples one of the compressors and one of the turbines, such that torque can be transferred between the compressor-turbine pair.

## Description

### FIELD OF THE INVENTION

This application relates to an air processing system for an aircraft, an aircraft and a method.

### BACKGROUND

In order to reduce aircraft emissions hydrogen fuel cells are used increasingly to generate electrical energy for the aircraft. Hydrogen fuel cells require a supply of conditioned hydrogen. An aircraft cabin requires an air supply system. It is desirable to reduce the space requirements when using a hydrogen supply system and an air supply system.

### SUMMARY

In a first aspect of the invention, there is provided an air processing system for an aircraft comprising a hydrogen fuel cell. The air processing system comprises an input airflow; a first and a second compressor, wherein each compressor is configured to compress the airflow in a compression stage; a first and a second turbine, wherein each turbine is configured to decompress the airflow in a decompression stage; and a first and a second shaft each configured to independently rotate. Each shaft mechanically couples one of the compressors and one of the turbines, such that torque can be transferred between the compressor-turbine pair.

In providing air for an aircraft cabin, compressors and turbines may be required to provide compression and decompression stages. The compressors and turbines are in pairs and mechanically coupled by a shaft. Each shaft can independently rotate. As a result, each compressor-turbine pair can physically be located in a different part of the aircraft. This can facilitate space saving, as well as improved energy efficiency if, for example, the compressor or turbine is needed to be located close to a heat exchanger to improve energy transfer or reduce energy wastage in pipping.

Additionally, because each shaft can rotate independently, the rotational speed of each shaft can be different. This means each compressor-turbine pair can provide optimised compression / decompression for its respective position in the air processing system, without the need of, for example, a gear box which may be necessary if the compressors and turbines all shared a common shaft. This allows for a simpler mechanical design, which can be more reliable, lightweight and cost effective.

In some examples the second compressor is downstream of the first compressor. In some examples the first turbine is downstream of the second compressor. In some examples the second turbine is downstream of the first turbine.

In some examples the first compressor and the second turbine are mechanically coupled by the first shaft. In some examples the second compressor and the first turbine are mechanically coupled by the second shaft.

The aircraft may comprise a storage tank for storing hydrogen, a fuel cell configured to generate power from the hydrogen and a fuel supply line configured to supply the hydrogen from storage tank to the fuel cell.

In some examples the air processing system further comprises a heat exchange system. The fuel supply line and the air in the air processing system pass through the heat exchange system such that the hydrogen cools the air in use.

Hydrogen is stored as a subcooled liquid to reduce the space it occupies on the aircraft. However, the hydrogen must be heated before it reaches the fuel cell. Air in a fresh air supply line may need to be cooled before it can be supplied to an aircraft's cabin. As such, total energy consumption may be reduced by transferring heat from the air to the hydrogen.

In some examples the heat exchange system comprises a first heat exchanger downstream of the first compressor and upstream of the second compressor.

In some examples the heat exchange system comprises a second heat exchanger downstream of the first turbine and upstream of the second turbine.

The air processing system may comprise an air conditioning system configured to condition the air downstream of the second compressor and upstream of the first turbine.

In some examples the air conditioning system comprises a heat transfer circuit configured to transfer heat between the fuel cell and the air conditioning system.

A fuel cell may generate an excess amount of heat. In order to maintain efficient operation, the heat must be removed from the fuel cell (i.e. the fuel cell must be cooled). Using the excess heat from the fuel cell to heat air in the air processing system is an efficient way of providing air conditioning.

In some examples the heat transfer circuit provides cooling to the fuel cell and heating to the air.

In some examples the air conditioning system further comprises a filtration system.

In some examples the air conditioning system further comprises a hydration system.

In some examples the air conditioning system further comprises a dehydration system.

The air processing system may comprise a splitter downstream of the first compressor, the splitter configured to direct a portion of the compressed air output from the first compressor to a water and air system for the fuel cell.

Directing a portion of the air for the cabin to a fuel cell is an efficient way of providing the fuel cell with air.

The air processing system may comprise a second splitter downstream of the second turbine, the second splitter configured to direct a portion of the decompressed air output from the second turbine for the fuel cell, and a portion of the decompressed air for a cabin of the aircraft.

The air processing system may comprise a mixer downstream of the cabin, the mixer configured to mix air extracted from the cabin with air output from the fuel cell and hydrogen output from the fuel cell for providing a combustor with a combustible fluid.

By combusting waste hydrogen from the fuel cell, the efficiency of the aircraft can be improved. Additionally, because the waste hydrogen can be combusted, there is no need to store or otherwise dispose of the waste hydrogen, which improves the aircrafts safety.

In a second aspect there is provided a processing system comprising a fuel cell and the air processing system of the first aspect.

In some examples the water for the water and air system is provided by the fuel cell. Because water is a waste product of the fuel cell, the waste water from the fuel cell can be recycled by using it to hydrate the air.

In a third aspect there is provided an aircraft comprising a storage tank for storing hydrogen; a fuel cell configured to generate power from the hydrogen; a fuel supply line configured to supply the hydrogen from storage tank to the fuel cell; and the air processing system of the first aspect.

In a fourth aspect there is provided a method of processing air for an aircraft comprising a hydrogen fuel cell. The method comprises providing an input airflow; compressing the input airflow in a first compression stage using a first compressor, and in a second compression stage using a second compressor; decompressing the airflow in a first decompression stage using a first turbine, and in a second decompression stage using a second turbine; providing a first and a second shaft, wherein each shaft is configured to independently rotate; and mechanically coupling one of the compressors and one of the turbines, such that torque can be transferred between the compressor-turbine pair.

The processing system of the second aspect or the aircraft of the third aspect may comprise any of the features described with respect to the first aspect. The method of the fourth aspect may include any functional steps described in relation to the first to third aspects.

### BRIEF DESCRIPTION OF THE DRAWINGS

Various examples will now be described with reference to the accompanying drawings in which:

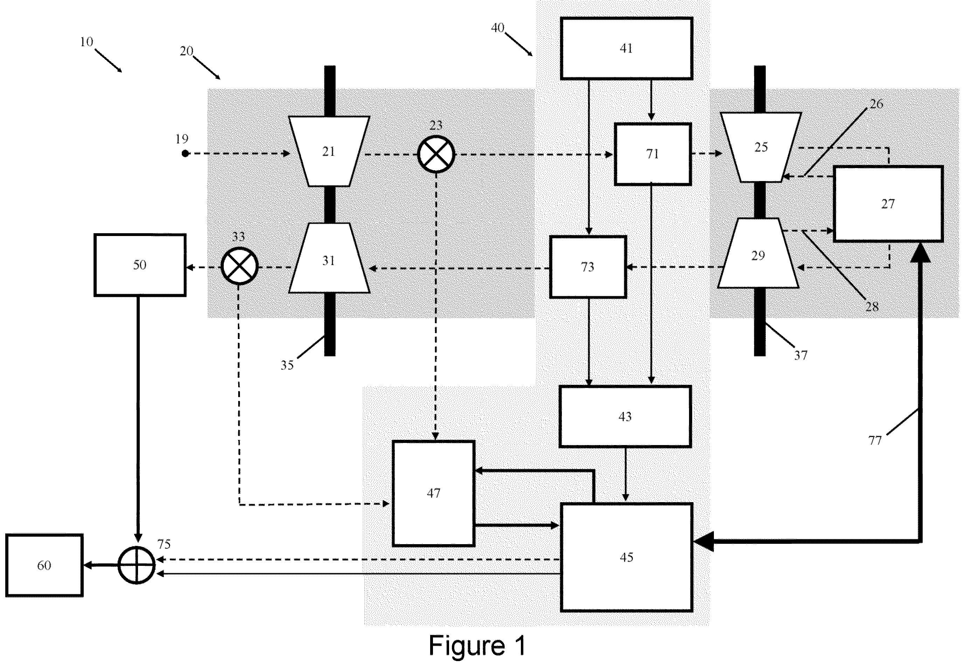

Figure 1 shows a process flow diagram of a processing system for an aircraft, which includes an air processing system and a hydrogen fuel cell system.

### DETAILED DESCRIPTION

With reference to Fig. 1, an aircraft 10 comprises an air processing system 20, a hydrogen fuel cell system 40, an aircraft cabin 50 and a combustor 60.

The aircraft 10 provides the air processing system 20 with an input airflow 19. It is an objective of the air processing system 20 to condition the input airflow 19 to provide conditioned air to the aircraft cabin 50. This may be whilst the aircraft is in flight at an altitude of, for example, 10,000 meters (32,808 feet), or whilst the aircraft is not in flight and is at ground or sea level.

The input airflow 19 is extracted from the aircraft's external local environment. As a result, the condition of the input airflow 19 varies significantly. For example, the temperature of the airflow 19 could vary between -50°C to +40°C and the moisture or humidity level could vary between 1% to 70%. It is thus an objective of the air processing system 20 to be able to condition the input airflow 19 to an appropriate level for human comfort in the cabin 50.

In general, it is to be understood that the terms "first" and "second" as used herein are not to denote any particular order. The terms "first" and "second" are used merely as identifiers for different components or stages.

The air processing system 20 comprises a first compressor 21, a first splitter 23, a second compressor 25, an air conditioning system 27, a first turbine 29, a second turbine 31, a second splitter 33, a first shaft 35 and a second shaft 37.

The first compressor 21 and the second turbine 31 are mechanically coupled by the first shaft 35. The second compressor 25 and the first turbine 29 are mechanically coupled by the second shaft 37.

Each of the first and the second shafts 35, 37 are separate shafts. Each of the first and the second shafts 35, 37 are configured to independently rotate. As such, the first shaft 35 is capable of having, and in this example does have, a location within the air processing system 20 that is different to the second shaft 37.

Briefly, the first compressor 21 is downstream of the input airflow 19. The second compressor 25 is downstream of the first compressor 21. The air conditioning system 27 is generally downstream of the second compressor. The first turbine 29 is generally downstream of the air conditioning system 27. The second turbine 31 is downstream of the first turbine 31.

The hydrogen fuel cell system 40 is for providing the aircraft 10 with electrical energy from stored liquid hydrogen. The hydrogen fuel cell system 40 comprises a hydrogen storage tank 41, a flash tank 43, a hydrogen fuel cell 45 and a water and air system 47.

The air processing system 20 and the hydrogen fuel cell system 40 are connected or are capable of heat transfer by first and second heat exchangers 71, 73. Each of the first and second heat exchangers 71, 73 allow the airflow in the air processing system 20 to pass through the heat exchanger 71, 73 in a first channel, and the hydrogen from the hydrogen fuel cell system 40 to pass through the heat exchanger 71, 73 in a second channel. The first and second heat exchangers 71, 73 are thus configured to provide effective heat transfer between the fluids in the first and second channels.

The first heat exchanger 71 is downstream of the first compressor 21 and upstream of the second compressor 25. The second heat exchanger 73 is downstream of the first turbine 29 and upstream of the second turbine 31.

Briefly, the heat exchangers 71 ,73 are downstream of the hydrogen storage tank 41. The flash tank 43 is downstream of the heat exchangers 71 ,73. The fuel cell 45 is downstream of the flash tank 43. The water and air system 47 is downstream of the fuel cell 45, but is also configured to provide fluid back to the fuel cell 45.

The air processing system 20 further comprises a mixer 75 and a heat transfer circuit 77.

The mixer 75 receives air extracted from the cabin 50, and air and waste hydrogen output from the fuel cell 45 as input fluids. The mixer 75 is thus downstream of the cabin 50 and the fuel cell 45. The mixer 75 is configured to mix the input fluids and output a combustible fluid to the combustor 60. The combustor 60 is thus downstream of the mixer 75.

The heat transfer circuit 77 is connected between the fuel cell 45 and the air conditioning system 27, and is configured to transfer heat / thermal energy between these two components / systems by using heat exchangers and suitable coolant mediums, for example Ethylene-Glycol, to achieve the heat transfer.

It is to be understood that additional components may be required to fully implement this disclosure, for example any component generally in the field of Electronic, Control and Instrumentation (E, C&I), or other chemical or processing apparatus, may be required.

In an exemplary scenario, the aircraft 10 is in flight at an altitude of 10,000 meters. The input airflow 19 is at -50°C, 26,000 Pa (approximately 25% of atmospheric pressure at sea level), and has a relative humidity of 1%. In order to meet regulatory safety requirements and for human comfort, it is desired that the air supplied to the cabin 50 be at 85,000 Pa, 24°C, with a relative humidity of 20%.

The input airflow 19 is received by the first compressor 21 which provides a first compression stage to the airflow 19. As a result, the temperature and pressure of the airflow 19 increases.

The compressed airflow output from the compressor 21 is provided to the first splitter 23, which provides a portion of the compressed airflow to the first heat exchanger 71, and a portion of the compressed airflow to the water and air system 47, which is discussed in more detail further below.

At the same time, liquid hydrogen stored in the hydrogen storage tank 41 is extracted for use in the hydrogen fuel cell. The liquid hydrogen is stored at below -250°C, and at a pressure above 70 MPa.

The heat exchanger 71 allows the compressed airflow provided by the first splitter 23 to transfer heat energy to the liquid hydrogen extracted from the storage tank 41. In this manner, the compressed airflow is cooled and the hydrogen is heated. The remaining description of the airflow process system 20 is continued in more detail further below.

The second heat exchanger 73 provides the same functionality as the first heat exchanger 71. Specifically, the second heat exchanger 73 allows the relatively warmer airflow from the air processing system to heat up the hydrogen extracted from the storage tank 41.

By providing the first and second heat exchangers 71, 73, the hydrogen has two paths by which it is heated. By providing two paths in this manner, the control, reliability and safety when handling the hydrogen onboard an aircraft is improved.

The hydrogen output from the heat exchangers 71, 73 is generally in a gaseous state. However, the pressure of the hydrogen may still be significantly high. There may also be a risk that some of the hydrogen is not in the gaseous state. For safety, after the heat exchangers 71, 73 the hydrogen is directed to the flash tank 43. The flash tank 43 causes flashing of the hydrogen. This process reduces the overall pressure of the hydrogen, which causes the hydrogen to fully transition into the gaseous state. The output of the flash tank 43 is conditioned hydrogen in the gaseous state.

The fuel cell 45 receives the conditioned hydrogen output from the flash tank 43 and the air from the water and air system 47. The fuel cell 45 chemically converts the hydrogen and air into water and air, and generates electricity in the process. Some hydrogen is not consumed by the fuel cell 45, and as a result the fuel cell outputs waste hydrogen, water and air.

Fuel cells offer reliable power generation for high power requirements. With no moving parts, the construction of a fuel cell is simple and output power supply can be varied to fluctuating power demand. Integrating the fuel cell with an onboard micro or nano-grid network through appropriate power converts (DC-AC) may be beneficial. Varying the power output can be achieved by controlling the flow of inbound reactants (hydrogen and air). This offers significant advantages with simplicity and zero-emissions.

The waste water output from the fuel cell is provided to the water and air system 47, and is used to condition the airflow provided by the first splitter 23 to a sufficient moisture / hydration level. In this manner, the water and air system 47 recycles water from the fuel cell.

During operation of the fuel cell 45, waste thermal / heat energy is generated by the fuel cell which needs to be safely dissipated or managed. If the waste heat generated by the fuel cell is not removed from the fuel cell, the fuel cell may overheat and malfunction. Because one of the input reactants to the fuel cell is hydrogen which is highly combustible, this poses a particular risk and challenge. Safely dissipating the waste heat, as well as disposal of the waste hydrogen and air output from the fuel cell are discussed further below.

Returning to the air processing system 20, after passing through the first heat exchanger 71, the second compressor 25 provides a second compression stage to the airflow. The airflow is thus further compressed and as a result the temperature of the airflow increases.

The airflow is then provided to the air conditioning system 27. The system 27 is responsible for filtering the airflow, hydrating / humidifying or dehumidifying the airflow, and increasing the temperature of the airflow.

Humidifying or dehumidifying is achieved by an internal closed loop control system which includes an internal water storage tank. If the airflow is too humid it is dehumidified and excess water stored in the internal water storage tank. If the airflow is too dry / dehydrated, the water in the internal water storage tank is incorporated into the airflow (by means of a throttling valve, ejector and mixer). Filtration can be achieved by appropriate filtering components.

The airflow is heated by the heat transfer circuit 77. The heat transfer circuit 77 includes heat exchangers and heat transfer fluids, for example Ethylene-Glycol, to achieve the heat transfer. The heat transfer circuit 77 transfers the waste heat produced by the fuel cell 45 to the air conditioning system 27 for heating the airflow. As a result, the airflow is heated and the fuel cell 45 is cooled.

Once the airflow has been conditioned, the airflow is provided to a first turbine 29. Providing the conditioned airflow to the first turbine 29 causes the first turbine 29 to rotate, which provides the airflow with a first decompression stage.

Because the first turbine 29 is mechanically coupled to the second compressor 25 by the second shaft 37, the second compressor 25 is also caused to rotate, at the same rotational speed, as the first turbine 29. In this manner, by providing an airflow to the first turbine 29, the second compressor 25 provides the second compression stage.

The air conditioning system 27 is shown in Fig. 1 as a single block downstream of the second compressor 25 and upstream of the first turbine 29. However, it is to be understood that components of the air conditioning system 27 may be upstream of the second compressor 25 as depicted by arrow 26 in Fig. 1; or downstream of the first turbine 29 as depicted by arrow 28 in Fig.1.

For example, a mixer may be provided before the second compressor 25 which mixes water with the airflow for humidification, before the second compression stage. This would increase the effectiveness of the second compression stage because the airflow is more dense. Additionally, for example, the heat transfer circuit 77 may provide a heat exchanger downstream of the first turbine 29, for heating the airflow after the first decompression stage. In this example, the airflow output from the air conditioning system 27 may be directly provided to the second heat exchanger 73.

After the air conditioning and first decompression stage, the airflow is provided to the second heat exchanger 73 for heat exchange between the hydrogen and airflow as discussed above. After the heat exchanger 73 the airflow is then provided to the second turbine 31. Providing the airflow to the second turbine 31 causes the second turbine 29 to rotate, which provides the airflow with a second decompression stage.

Because the second turbine 31 is mechanically coupled to the first compressor 21 by the first shaft 35, the first compressor 21 is also caused to rotate, at the same rotational speed, as the second turbine 31. In this manner, by providing an airflow to the second turbine 31, the first compressor 21 provides the first compression stage.

In some examples a motor or generator may be provided on the shafts 35, 37 to contribute to driving the compressors 21, 25, or to receive excess torque from turbines 29, 31.

Because the first compressor 21 and the second turbine 31 have the same rotational speed, the first compression stage and second decompression stage will be of a similar ratio. Specifically, the amount of compression achieved through the first compression stage will be similar to the amount of decompression achieved through the second decompression stage.

Similarly, because the second compressor 25 and the first turbine 29 have the same rotational speed, the second compression stage and first decompression stage will be of a similar ratio. Specifically, the amount of compression achieved through the second compression stage will be similar to the amount of decompression achieved through the first decompression stage.

It can thus be seen that the first compressor 21 and second turbine 31 can be configured to a provide low ratio compression / decompression, whilst the second compressor 25 and the first turbine 29 can be configured to provide high ratio compression / decompression.

In this manner, by providing the first shaft 35 and second shaft 37, wherein each shaft is capable of independent rotation, the air processing system 20 can provide separate low ratio and high ratio compression / decompression stages in a mechanically simple design.

Additionally, because each of the shafts are independent, they may be located in separate places within the aircraft 10 or the air processing system 20, which can facilitate improved space saving, for example by offering a modular approach to assembling the air processing system 20 within the aircraft 10.

Furthermore, the compressor-turbine pairs may be physically located near a heat exchanger or a part of an air conditioning system which allows for improved efficiency of the heat exchange or air conditioning.

As a result of the above, the airflow output from the second turbine 31 is conditioned appropriately for human comfort and regulatory requirements. The airflow is provided to the aircraft cabin 50.

The airflow output from the second turbine 31 can also be provided to the second splutter 33 which directs a portion of the airflow to the water and air system 47 for use by the fuel cell.

Because the airflow output from the second turbine 31 generally has a higher level of relative humidity compared to the airflow output from the first compressor 21, the airflow provided by the second splitter 33 to the water and air system 47 may form the base fluid for the air to be provided to the fuel cell 45. The airflow from the first splitter 23 may, inside the water and air system 47, be used to de-humidify the airflow from the second splitter 33, or may be combined with the waste water output from the fuel cell 45 to further hydrate the airflow from the second splitter 33.

As a result, the water and air system 47, by receiving the compressed (and relatively dry) airflow from the first compression stage, and receiving the conditioned (and relatively humid) airflow from the second decompression stage, and water from the fuel cell, can mix each of these fluids in a ratio so as to achieve an airflow for providing back to the fuel cell with an optimal level of humidity.

As a result, a more efficient fuel cell system 40 can be achieved, which utilises airflow from different parts of the air processing system 20, and waste water from the fuel cell 45.

As discussed above, the mixer 75 receives air extracted from the cabin 50 and combines this with waste hydrogen and air from the fuel cell 75. The mixer 75 mixes the input fluids in an optimal ratio such that the mixer 75 outputs a combustible fluid. The output combustible fluid is provided to a combustor 60.

The combustor 60 combusts the fluid provided by the mixer 75 and thereby drives a system which can generate electricity (through the use of, for example, a turbine and electrical generator), or can use the energy released from the combustion to propel the aircraft, or can thereby provide any other useful work to the aircraft.

As a result, by collecting the waste hydrogen from the fuel cell 45 and mixing the waste hydrogen with air from the aircraft cabin and air from the fuel cell 45, a combustible fluid can be formed which can be combusted to provide useful work which improves the efficiency of the aircraft.

Moreover, by combusting waste hydrogen, the risk of handling or storing waste hydrogen is reduced and the aircraft safety is improved.

Various aspects of the apparatus disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. An air processing system for an aircraft comprising a hydrogen fuel cell, the air processing system comprising:
an input airflow;
a first and a second compressor, wherein each compressor is configured to compress the airflow in a compression stage;
a first and a second turbine, wherein each turbine is configured to decompress the airflow in a decompression stage; and
a first and a second shaft each configured to independently rotate;
wherein each shaft mechanically couples one of the compressors and one of the turbines, such that torque can be transferred between the compressor-turbine pair.

2. An air processing system according to claim 1, wherein
the second compressor is downstream of the first compressor;
the first turbine is downstream of the second compressor; and
the second turbine is downstream of the first turbine.

3. An air processing system according to claim 2, wherein:
the first compressor and the second turbine are mechanically coupled by the first shaft; and
the second compressor and the first turbine are mechanically coupled by the second shaft.

4. An air processing system according to claim 3, wherein the aircraft further comprises a storage tank for storing hydrogen, a fuel cell configured to generate power from the hydrogen and a fuel supply line configured to supply the hydrogen from storage tank to the fuel cell; the air processing system further comprising:
a heat exchange system,
wherein the fuel supply line and the air in the air processing system pass through the heat exchange system such that the hydrogen cools the air in use.

5. An air processing system according to claim 4, wherein
the heat exchange system comprises a first heat exchanger downstream of the first compressor and upstream of the second compressor; and/or
a second heat exchanger downstream of the first turbine and upstream of the second turbine.

6. An air processing system according to claim 5, further comprising an air conditioning system configured to condition the air downstream of the second compressor and upstream of the first turbine.

7. An air processing system according to claim 6, wherein the air conditioning system comprises a heat transfer circuit configured to transfer heat between the fuel cell and the air conditioning system.

8. An air processing system according to claim 7, wherein the heat transfer circuit provides cooling to the fuel cell and heating to the air.

9. An air processing system according to claim 7 or 8, wherein the air conditioning system further comprises a filtration system, a hydration system and/or a dehydration system.

10. An air processing system according to claims 4-9, further comprising a splitter downstream of the first compressor, the splitter configured to direct a portion of the compressed air output from the first compressor to a water and air system for the fuel cell.

11. An air processing system according to claims 10, further comprising a second splitter downstream of the second turbine, the second splitter configured to direct a portion of the decompressed air output from the second turbine for the fuel cell, and a portion of the decompressed air for a cabin of the aircraft.

12. An air processing system according to claim 11, further comprising a mixer downstream of the cabin, the mixer configured to mix air extracted from the cabin with air output from the fuel cell and hydrogen output from the fuel cell for providing a combustor with a combustible fluid.

13. A processing system comprising a fuel cell and the air processing system according to any of claims 10 to 12, wherein the water for the water and air system is provided by the fuel cell.

14. An aircraft comprising:
a storage tank for storing hydrogen;
a fuel cell configured to generate power from the hydrogen;
a fuel supply line configured to supply the hydrogen from storage tank to the fuel cell; and
the air processing system according to any of claims 1 to 12 or the processing system of claim 13.

15. A method of processing air for an aircraft comprising a hydrogen fuel cell, the method comprising:
providing an input airflow;
compressing the input airflow
in a first compression stage using a first compressor, and
in a second compression stage using a second compressor;
decompressing the airflow
in a first decompression stage using a first turbine, and
in a second decompression stage using a second turbine;
providing a first and a second shaft, wherein each shaft is configured to independently rotate; and
mechanically coupling one of the compressors and one of the turbines, such that torque can be transferred between the compressor-turbine pair.
